# EUROPEAN PATENT APPLICATION

(11) **EP 1 248 212 A1**
(43) Date of publication of application: **09.10.2002**
(21) Application number: 00931708.2
(22) Date of filing: 06.06.2000
(51) Int. Cl.: G06F 17/60, G07G 1/14

(54) **CENTER DEVICE, TERMINAL, USER SYSTEM SUPERVISING DEVICE, METHOD FOR CONTROLLING THEM, AND MEDIUM ON WHICH PROGRAM IS RECORDED**

(30) Priority: 17.06.1999 JP 17136199
(71) Applicant: NTT Comware Corporation, Tokyo 108-8019 (JP)
(72) Inventor: TSUJI, Tomoyuki, Tokyo 108-0075 (JP)
(74) Representative: HOFFMANN - EITLE
(86) International application number: JP0003660
(87) International publication number: WO00079443

(57) **Abstract**

When a consumer orders a product to a mail-order company, for example, the mail-order company registers charge information data corresponding to the product ordered by the consumer, into a center unit. When the consumer has paid the charge at a financial organization or a charge collecting agent, payment information representing the payment of the charge is transmitted to the center unit. The center unit registers the payment information, and transmits this information to a user system of the mail-order company. The mail-order company that has confirmed the payment of the charge by this consumer dispatches the product to this consumer who has ordered this product.

## Description

### Technical Field

The present invention relates to a central unit, a terminal unit, and a user-system managing unit, capable of efficiently and smoothly carrying out a charge payment operation for the provision of services or goods, a method of controlling these units, and a medium recorded with a program.

### Background Art

A conventional mail-order selling operation has been carried out as follows, as an example. First, a mail-order company that has received an order for a product from a consumer issues a bill of the charge for the product, and posts the issued bill to the consumer. Next, the consumer who has received the bill pays the charge described in the bill at a financial organization or a charge collecting agent. Then, the mail-order company, after confirming the payment of the charge for the product, dispatches the product to this consumer.

There is also a case where the charge managing operation relating to the issuance of the bill or the payment of the charge for the product is carried out by an agent that performs the charge managing operation on behalf of the mail-order company.

When the consumer changes a product after making an order for the product, there arises a change in the charge made by the mail-order company to the consumer. When the charge has been changed, the bill that was issued before the change becomes invalid. Accordingly, it has been necessary for the mail-order company to issue a new bill, and post the issued bill to the consumer again.

Further, when the consumer has lost the bill, it has also been necessary to re-issue the bill in a similar manner. Furthermore, when the charge paid by the consumer was too little, it has been necessary to re-issue the bill for the shortage.

Therefore, the present invention provides a center unit, a terminal unit, and a user-system managing unit, capable of efficiently and smoothly carrying out a charge payment operation for the provision of services or goods, a method of controlling these units, and a medium recorded with a program.

### Disclosure of Invention

According to a first aspect of the present invention, there is provided a center unit that can be connected, via a communication line, to a terminal unit to which information representing a payment of a charge is input, the center unit comprising: charge data storage that stores charge data representing a charge and a consumer; payment data storage that stores payment data corresponding to the charge data; a charge data controller that receives consumer data representing the consumer transmitted from the terminal unit, reads the charge data corresponding to the consumer data from the charge data storage, and transmits the charge data to the terminal unit; and a payment data controller that receives payment-information data representing the payment of the charge corresponding to the charge data from the terminal unit, and registers payment data generated based on the payment-information data into the payment data storage.

The payment data controller may transmit the payment-information data to an external user-system managing unit.

According to a second aspect of the present invention, there is provided a terminal unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from an external terminal unit, reads the charge data corresponding to the consumer data from the charge data storage, and transmits the charge data to the external terminal unit; and a payment data controller that receives payment-information data representing the payment of the charge corresponding to the charge data from the external terminal unit, and registers payment data generated based on the payment-information data into the payment data storage, wherein the terminal unit comprises: a consumer data transmitter that transmits consumer data to the center unit; a charge data receiver that receives charge data corresponding to the consumer data, from the center unit; a display that displays charge information including a charge, based on the charge data received by the charge data receiver; and a payment-information data transmitter that pays the charge based on the received charge data, and transmits the payment-information data to the center unit.

According to a third aspect of the present invention, there is provided a terminal unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from an external terminal unit, reads the charge data corresponding to the consumer data from the charge data storage, and transmits the charge data to the external terminal unit; and a payment data controller that receives payment-information data representing the payment of the charge corresponding to the charge data from the external terminal unit, and registers payment data generated based on the payment-information data into the payment data storage, wherein the terminal unit comprises: a consumer data transmitter that transmits consumer data to the center unit; a charge data receiver that receives charge data corresponding to the consumer data, from the center unit; a display that displays charge information including a charge, based on the charge data received by the charge data receiver; a payment-information data transmitter that pays the charge based on the received charge data, and transmits the payment-information data to the center unit; and a reader that reads the consumer data.

According to a fourth aspect of the present invention, there is provided a user-system managing unit that can be connected, via a communication line, to a center unit comprising: charge data storage that stores charge data representing a charge and a consumer; payment data storage that stores payment data corresponding to the charge data; a charge data controller that receives consumer data representing the consumer transmitted from the terminal unit, reads the charge data corresponding to the consumer data from the charge data storage, and transmits the charge data to the terminal unit; and a payment data controller that receives payment-information data representing the payment of the charge corresponding to the charge data from the terminal unit, and registers payment data generated based on the payment-information data into the payment data storage, wherein the user-system managing unit comprises: a payment data reader that reads payment data from the payment data storage; and a charge data registration updater that transmits the charge data to the center unit, in order to register or update the charge data stored in the charge data storage.

According to a fifth aspect of the present invention, there is provided a user-system managing unit that can be connected, via a communication line, to a center unit comprising: charge data storage that stores charge data representing a charge and a consumer; payment data storage that stores payment data corresponding to the charge data; a charge data controller that receives consumer data representing the consumer transmitted from the terminal unit, reads the charge data corresponding to the consumer data from the charge data storage, and transmits the charge data to the terminal unit; and a payment data controller that receives payment-information data representing the payment of the charge corresponding to the charge data from the terminal unit, registers payment data generated based on the payment-information data into the payment data storage, and transmits the payment-information data to an external user-system managing unit, wherein the external user-system managing unit comprises: a payment-information data receiver that receives the transmitted payment-information data; and a charge data registration updater that transmits the charge data to the center unit, in order to register or update the charge data stored in the charge data storage.

According to a sixth aspect of the present invention, there is provided a method of controlling a center unit that can be connected, via a communication line, to a terminal unit to which information representing a payment of a charge is input, the center unit comprising: charge data storage that stores charge data representing a charge and a consumer; and payment data storage that stores payment data corresponding to the charge data, wherein the method of controlling the center unit comprises: a charge data controlling step that receives consumer data, representing the consumer, transmitted from the terminal unit, reads the charge data corresponding to the consumer data from the charge data storage, and transmits the charge data to the terminal unit; and a payment data controlling step that receives payment-information data representing the payment of the charge corresponding to the charge data from the terminal unit, and registers payment data generated based on the payment-information data into the payment data storage.

The payment data controlling step may transmit the payment-information data to an external user-system managing unit.

According to a seventh aspect of the present invention, there is provided a method of controlling a terminal unit that can be connected, via a communication line, to a center unit that executes a control method comprising: a charge data controlling step that receives consumer data representing a consumer transmitted from an external terminal unit, reads charge data corresponding to the consumer data from charge data storage, and transmits the charge data to the external terminal unit; and a payment data controlling step that receives payment-information data representing a payment of a charge corresponding to the charge data from the external terminal unit, and registers payment data generated based on the payment-information data into a payment data storage, wherein the method of controlling the terminal unit comprises: a consumer data transmitting step that transmits consumer data to the center unit; a charge data receiving step that receives charge data corresponding to the consumer data, from the center unit; a display step that displays charge information including a charge on a display, based on the charge data received at the charge data receiving step; and a payment-information data transmitting step that pays the charge based on the received charge data, and transmits the payment-information data to the center unit.

According to an eighth aspect of the present invention, there is provided a method of controlling a user-system managing unit that can be connected, via a communication line, to a center unit that executes a control method comprising: a charge data controlling step that receives consumer data representing a consumer transmitted from an external terminal unit, reads charge data corresponding to the consumer data from charge data storage, and transmits the charge data to the terminal unit; and a payment data controlling step that receives payment-information data representing a payment of a charge corresponding to the charge data from the terminal unit, and registers payment data generated based on the payment-information data into a payment data storage, wherein the method of controlling the user-system managing unit comprises: a payment data reading step that reads payment data from the payment data storage; and a charge data registration updating step that transmits the charge data to the center unit, in order to register or update the charge data stored in the charge data storage.

According to a ninth aspect of the present invention, there is provided a method of controlling a user-system managing unit that can be connected, via a communication line, to a center unit that executes a control method comprising: a charge data controlling step that receives consumer data representing a consumer transmitted from an external terminal unit, reads charge data corresponding to the consumer data from a charge data storage, and transmits the charge data to the terminal unit; and a payment data controlling step that receives payment-information data representing a payment of a charge corresponding to the charge data from the terminal unit, and registers payment data generated based on the payment-information data into a payment data storage, and transmits the payment-information data to an external user-system managing unit, wherein the method of controlling the user-system managing unit comprises: a payment-information data receiving step that receives the transmitted payment-information data; and a charge data registration updating step that transmits the charge data to the center unit, in order to register or update the charge data stored in the charge data storage.

According to a tenth aspect of the present invention, there is provided a medium recorded with a program of a center unit comprising: charge data storage that stores charge data representing a charge and a consumer; and payment data storage that stores payment data corresponding to the charge data, wherein the medium is recorded with a program of the center unit for receiving consumer data representing the consumer transmitted from the terminal unit, reading the charge data corresponding to the consumer data from the charge data storage, and transmitting the charge data to the terminal unit, and further for receiving payment-information data representing a payment of the charge corresponding to the charge data from the terminal unit, and registering payment data generated based on the payment-information data into the payment data storage.

The medium may be recorded with a program of the center unit for transmitting the payment-information data to an external user-system managing unit, in addition to the above program.

According to an eleventh aspect of the present invention, there is provided a medium recorded with a program of a terminal unit that can be connected, via a communication line, to a center unit that executes a program of receiving consumer data representing a consumer transmitted from an external terminal unit, reading charge data corresponding to the consumer data from charge data storage, transmitting the charge data to the external terminal unit, receiving from the external terminal unit payment-information data representing a payment of a charge corresponding to the charge data, and registering payment data generated based on the payment-information data into payment data storage, wherein the medium is recorded with a program of the terminal unit for transmitting consumer data to the center unit, receiving charge data corresponding to the consumer data, from the center unit, and displaying charge information including a charge on a display, based on the charge data received at the charge data receiving step, paying the charge based on the received charge data, and transmitting the payment-information data to the center unit.

According to a twelfth aspect of the present invention, there is provided a medium recorded with a program of a user-system managing unit that can be connected, via a communication line, to a center unit that executes a program of receiving consumer data representing a consumer transmitted from an external terminal unit, reading charge data corresponding to the consumer data from a charge data storage, transmitting the charge data to the terminal unit, receiving payment-information data representing a payment of a charge corresponding to the charge data from the terminal unit, and registering payment data generated based on the payment-information data into a payment data storage, wherein the medium is recorded with a program of the user-system managing unit for reading payment data from the payment data storage, and transmitting the charge data to the center unit, in order to register or update the charge data stored in the charge data storage.

According to a thirteenth aspect of the present invention, there is provided a medium recorded with a program of a user-system managing unit that can be connected, via a communication line, to a center unit that executes a program of receiving consumer data representing a consumer transmitted from an external terminal unit, reading charge data corresponding to the consumer data from charge data storage, transmitting the charge data to the terminal unit, receiving payment-information data representing a payment of a charge corresponding to the charge data from the terminal unit, registering payment data generated based on the payment-information data into a payment data storage, and transmitting the payment-information data to an external user-system managing unit, wherein the medium is recorded with a program of the user-system managing unit for receiving the transmitted payment-information data, and transmitting the charge data to the center unit, in order to register or update the charge data stored in the charge data storage.

### Brief Description of Drawings

Fig. 1 is a diagram showing a structure of a charge collecting system according to an embodiment of the present invention.
Fig. 2 is a diagram showing a detailed structure of the charge collecting system shown in Fig. 1.
Fig. 3 is a diagram showing an example of a file structure of a consumer information database stored in a center unit shown in Fig. 1.
Fig. 4 is a diagram showing an example of a file structure of a charge information database stored in the center unit shown in Fig. 1.
Fig. 5 is a diagram showing an example of a file structure of a payment-information database stored in the center unit shown in Fig. 1.
Fig. 6 is a diagram showing a payment card that is used to pay a charge in the present embodiment.
Fig. 7 is a diagram showing an example of the operation of the charge collecting system.
Fig. 8 is a diagram showing a detailed structure of a charge collecting system according to a second modification of the present invention.

### Best Mode of Carrying Out the Invention

### [1] Structure of Embodiment

### [1. 1] Total Structure

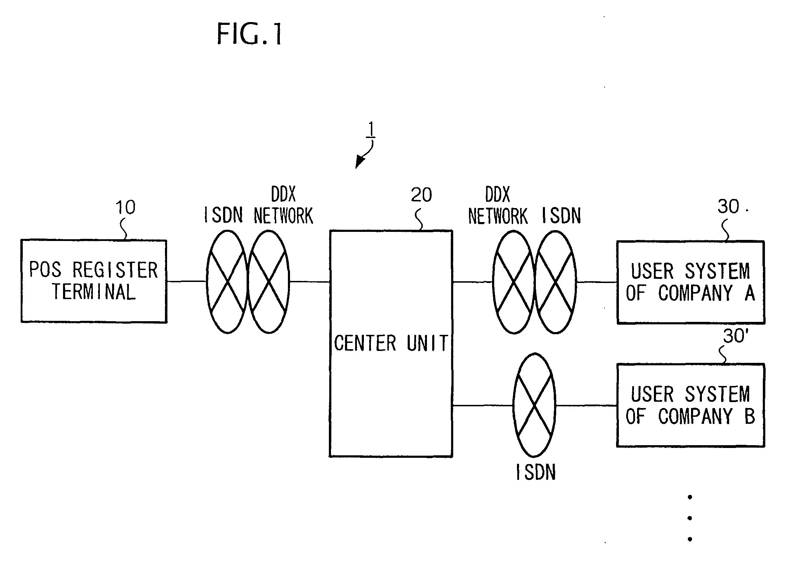

Fig. 1 shows a structure of a charge collecting system 1 according to an embodiment of the present invention.

As shown in Fig. 1, the charge collecting system 1 consists of a POS (Point of Sales) register terminal 10 (a terminal unit) as a terminal that is utilized for a consumer to pay a charge charged from a mail - order company, a center unit 20 that has charge information of a charge and payment information, and user systems 30, 30', --- that are built up within a plurality of companies respectively.

The POS register terminal 10 and the center unit 20, and the center unit 20 and each user system, are connected to each other respectively via the ISDN (Integrated Services Digital Network) line, the DDX (Digital Data Exchange) network, or other suitable communication line.

The above companies include mail-order companies and removal agents companies, for example. A charge collection of a mail-order company will be explained below as an example.

### [1. 2] Detailed Structure

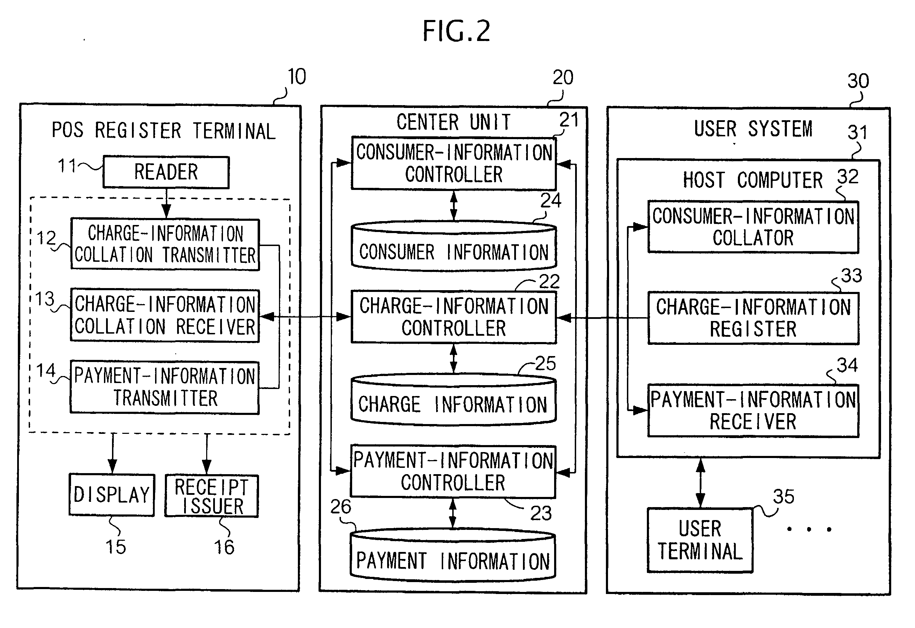

Fig. 2 shows detailed structures of the POS register terminal 10, the center unit 20, and the user system 30 respectively. These will be explained below.

### [1. 2. 1.]Structure of the POS Register Terminal 10

The POS register terminal 10 consists of a reader 11, a charge-information collation transmitter 12 (a consumer data transmitter), a charge-information collation receiver 13 (a charge data receiver), a payment-information transmitter 14 (a payment-information data transmitter), a display 15, and a receipt issuer 16.

The reader 11 has a function of reading a barcode displayed on a payment card that a user utilizes to pay a charge, for example. The barcode stores consumer identification data. This consumer identification data is a membership number data, for example.

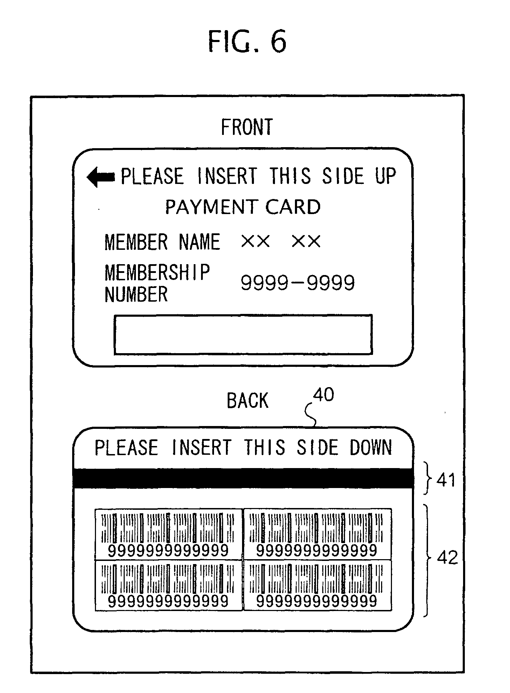

The payment card will be explained with reference to Fig. 6. As shown in Fig. 6, the payment card has, on its backside 40, a magnetic stripe 41 from which information stored therein can be read by a CD (Cash Dispenser) terminal or an ATM (Automatic Teller Machine) terminal, and a barcode 42 from which information stored therein can be read by the POS register terminal 10 or the like. In the present embodiment, the barcode 42 is recorded with a membership number data for identifying a consumer.

The charge-information collation transmitter 12 has a function of transmitting the membership number data that is the barcode information read by the reader 11, to the center unit 20. The center unit 20 searches for consumer information and charge information that have been registered by the user system 30, based on the membership number data. Then, the center unit 20 transmits the charge information data that has been detected by the search, to the POS register terminal 10.

The charge-information collation receiver 13 has a function of receiving the charge information transmitted from the center unit 20.

The payment-information transmitter 14 has a function of transmitting payment-information data representing that a charge has been paid, to the center unit 20, when the consumer has paid the charge, for example, when a payment button not shown provided in the POS register terminal 10 has been depressed.

The receipt issuer 16 has a function of issuing a receipt to a charge that has been paid.

The display 15 has a function of displaying charge information that has been received by the charge-information collation receiver 13, and displaying information similar to that displayed on the display of a general POS terminal register terminal.

### [1. 2. 2] Structure of the Center Unit 20

The center unit 20 consists of a consumer information database 24, a charge information database 25 (a charge data storage), a payment-information database 26 (a payment data storage), a consumer-information controller 21, a charge-information controller 22 (a charge data controller), and a payment-information controller 23 (a payment data controller).

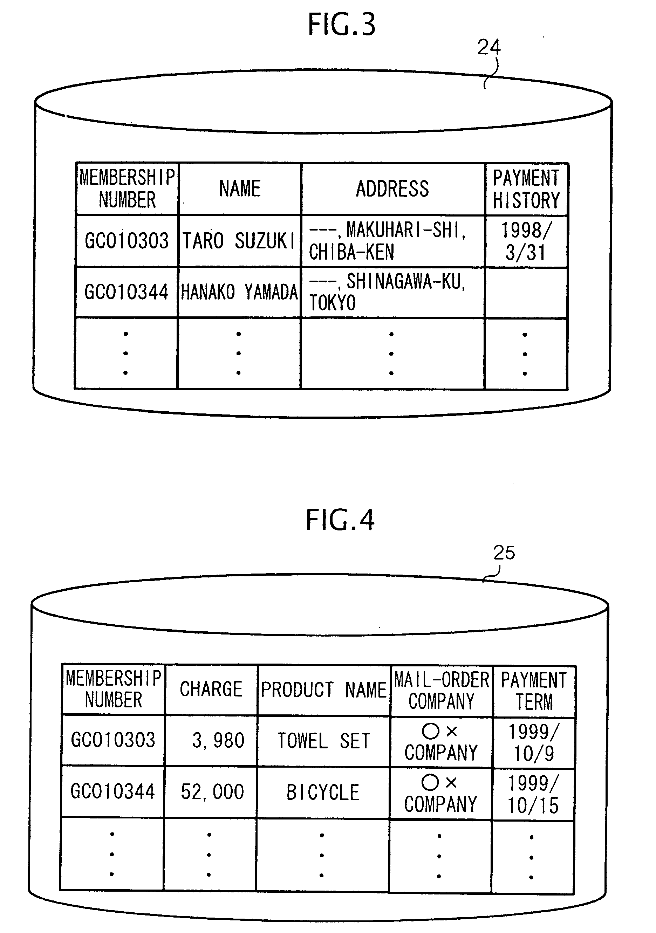

Fig. 3 shows an example of a file structure of the consumer information database 24. The consumer information database 24 is the database that has membership number data for identifying consumers as a key. Each consumer information data that is stored in the consumer information database 24 includes the name of a member, the address of the member, and the payment history of the member, for example.

In this case, the consumer information data is the data that has been generated when the consumer became a member for purchasing goods from a mail-order company. This consumer information data is registered into the consumer information database 24 by the consumer-information controller 21.

Fig. 4 shows an example of a file structure of the charge information database 25. The charge information database 25 is the database that has membership number data for identifying consumers as a key. Each charge information data that is stored in the charge information database 25 includes the charge for a product ordered, the name of the product, the name of the mail-order company, and the payment term, for example.

When the charge information data has passed the payment term, the charge-information controller 22 deletes the charge information data from the charge information database 25. At the same time, the charge-information controller 22 transmits a notification signal representing this deletion to the user system 30 of the mail-order company.

The charge information data is the data that is generated when an order for a product has been received from a user. Then, the charge information data is registered into the charge information database 25 by the charge-information controller 22.

When the consumer has changed the product, or when the amount paid by the consumer was too little, the charge information data registered in the charge information database 25 is updated to a new charge information data that has been input from the user system 30.

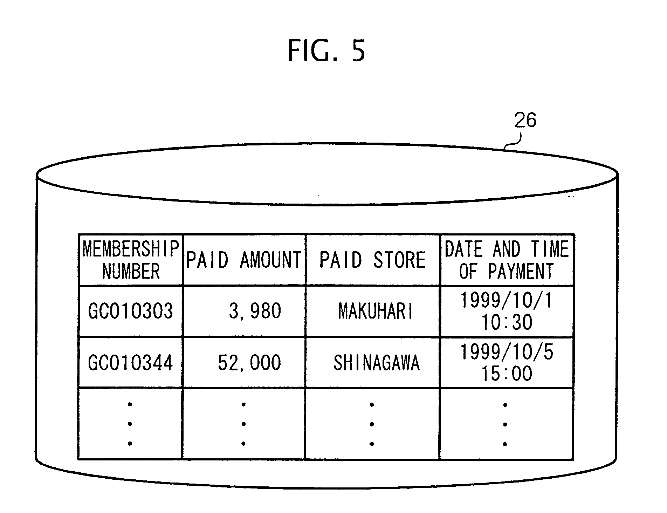

Fig. 5 shows an example of a file structure of the payment-information database 26. The payment-information database 26 is the database that has membership number data for identifying consumers as a key. Each payment-information data that is stored in the payment-information database 26 includes the amount paid by the consumer, the store where the payment was made, and the date and time of the payment, for example.

In the case of a contract service of indemnity insurance, for example, this date and time of payment can be used as the date and time when a contract has been made.

The payment-information data is the data that is generated when a consumer has paid the amount charged from the mail-order company. The payment-information data is registered into the payment-information database 26 by the payment-information controller 23.

Next, the consumer-information controller 21 has a function of searching the consumer information database 24 based on the membership number data received from the user system 30, and transmitting the consumer information data obtained by this search, to the user system 30.

The charge-information controller 22 has a function of searching the charge information database 25 based on the membership number data received from the POS register terminal 10, and transmitting the charge information data obtained by this search, to the POS register terminal 10.

The payment-information controller 23 has a function of editing the payment-information data received from the POS register terminal 10, registering the edited data into the consumer information database 26, and transmitting the payment-information data to the user system 30.

Further, the payment-information controller 23 has a function of judging whether the user system 30 is operating or not at the time of transmitting the payment-information data to the user system 30. When a decision has been made that the user system 30 is operating, the payment-information controller 23 transmits the payment-information data. When a decision has been made that the user system 30 is not operating, the payment-information controller 23 waits until the user system 30 begins to operate, and transmits the payment-information data after the user system 30 has started operation.

### [1. 2. 3] Structure of the User System 30

The user system 30 consists of a host computer 31 (a user-system managing unit) that manages the in-house system of a mail-order company, and a user terminal 35 that is connected to the host computer 31.

Further, the host computer 31 consists of a consumer-information collator 32, a charge-information register 33 (a charge data registration updater), and a payment-information receiver 34 (a payment-information data receiver).

The consumer-information collator 32 has a function of transmitting the membership number data input from the user terminal 35, to the center unit 20. The center unit 20 searches the consumer information registered by the user system 30, based on the membership number data, and transmits the consumer information data detected by this search, to the POS register terminal 10.

The consumer-information collator 32 has a function of receiving consumer information from the center unit 20.

The charge-information register 33 has a function of transmitting the charge information data that includes a charge and a product name, for example, to the center unit 20.

Further, the charge-information register 33 has a function of transmitting a new consumer information data including a charge after a change and a product name after a change, for example, that have been input from the user terminal 35, to the center unit 20, when the charge has been changed.

The payment-information receiver 34 has a function of receiving payment-information data that has been transmitted from the center unit 20. The mail-order company dispatches the ordered product to the consumer, according to the payment-information data received by the payment-information receiver 34.

### [2] Operation of the Embodiment

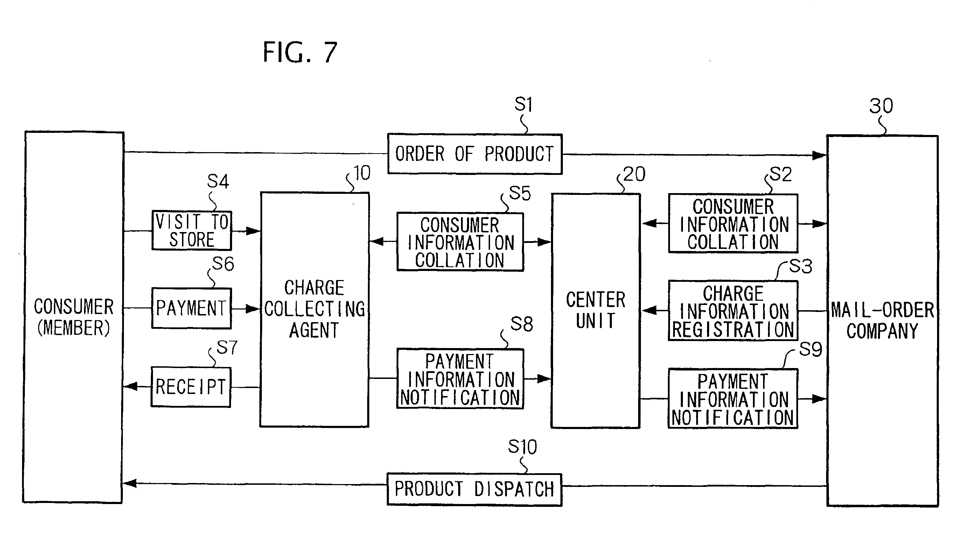

Next, an example of the operation of the embodiment using the above-described charge collecting system 1 will be explained with reference to Fig. 7.

First, a membership consumer orders a product to a mail-order company, by utilizing a telephone, a facsimile, the Internet, or the like (step S1).

In this case, the consumer notifies the membership number representing that the consumer has been registered as a member of the mail-order trade, to the mail-order company.

Next, the mail-order company that has received the order for the product from the consumer collates the consumer information data held in the center unit 20, based on the membership number notified from the consumer (step S2).

The collation of the consumer information data is carried out as follows. First, the consumer-information collator 32 of the host computer 31 transmits the membership number data input from the user terminal 35, to the center unit 20.

Next, the consumer-information controller 21 of the center unit 20 that has received the membership number data searches the consumer information database 24 for the consumer information data, using the membership number data as the key. When the consumer information data corresponding to this membership number data has been extracted as a result of this search, the consumer-information controller 21 transmits the extracted consumer information data to the host computer 31. On the other hand, when the consumer information data corresponding to this membership number data has not been extracted as a result of this search, the consumer-information controller 21 transmits an error message representing that the consumer information data corresponding to the input membership number does not exist, to the host computer 31.

The consumer-information collator 32 of the host computer 31 that has received the consumer information data or the error message transmits the consumer information data or the error message to the user terminal 35.

The mail-order company collates the consumer information data that includes the name and the address of the consumer, and the payment history, from the user terminal 35 connected to the host computer 31, in the manner as described above.

Next, an input operator of the mail-order company inputs, at the user terminal 35, the charge information data that includes the charge, the product name, and the payment term that correspond to the contents of the product order received from the consumer, and registers the data into the center unit 20 (step S3).

More specifically, the charge-information register 33 of the host computer 31 transmits the charge information data that includes the charge input at the user terminal 35, to the center unit 20. Then, the charge-information controller 22 of the center unit 20 that has received the charge information data registers the charge information data into the charge information database 25.

The mail-order company registers the charge information data that includes the charge into the center unit 20 from the user terminal 35 connected to the host computer 31, in the manner as described above.

Further, it is possible to update the charge information data that has been registered in the charge information database 25 of the center unit 20, by carrying out the update processing at the user terminal 35.

More specifically, the charge-information register 33 transmits the charge information data that includes the updated charge that has been input from the user terminal 35, to the center unit 20. Then, the charge-information controller 22 of the center unit 20 that has received the updated charge information data updates the existing charge information data registered in the charge information database 25, with the updated charge information data that has been received from the host computer 31.

As explained above, after the charge information data has been updated, it becomes possible for the consumer to immediately pay the charge based on the updated charge. Consequently, it becomes possible to promptly dispatch the product to the consumer.

Next, the consumer who has ordered the product visits a financial organ or a charge collecting agent to make payment of the charge (step S4).

More specifically, in the case of making payment from the charge collecting agent, for example, the consumer presents the payment card to a clerk of the charge collecting agent. The clerk who has been presented with the payment card applies this card to the reader 11 of the POS register terminal 10 to read the membership number data recorded in the barcode on the rear surface of the payment card.

Next, the POS register terminal 10 that has read the membership number data collates the charge information data that includes the charge for the product ordered by the consumer, from the center unit 20, based on the membership number data. The display 15 displays the collated charge information data (step S5).

More specifically, the charge-information collation transmitter 12 of the POS register terminal 10 transmits the membership number data read by the reader 11, to the center unit 20. The charge-information controller 22 of the center unit 20 that has received the membership number data searches the charge information database 25 for the charge information data, by using the membership number data as the key. Then, the charge-information controller 22 transmits the extracted charge information data to the POS register terminal 10. The, display 15 of the POS register terminal 10 displays the received charge information data.

Next, the clerk who has received the charge from the consumer depresses the payment button provided in the POS register terminal 10 (step S6).

When the payment button has been depressed, the receipt issuer 16 of the POS register terminal 10 issues a receipt that verifies that the charge has been received (step S7).

The payment-information transmitter 14 of the POS register terminal 10 transmits the payment-information data that includes the paid amount and the store where the payment has been made, to the center unit 20 (step S8).

Next, the payment-information controller 23 of the center unit 20 that has received the payment-information data edits the payment-information data, and registered the edited data into the payment-information database 26.

Then, the payment-information controller 23 judges whether the user system 30 of the mail-order company is operating or not. When a decision has been made that the user system 30 is operating, the payment-information controller 23 transmits the payment-information data to the host computer 31. On the other hand, when a decision has been made that the user system 30 is not operating, the payment-information controller 23 waits until when the user system 30 comes to operate. When the operation next time has been confirmed, the payment-information controller 23 transmits the payment-information data to the host computer 31 (step S9).

Next, the mail-order company that has confirmed the payment of the charge by receiving the payment-information data dispatches the product to the consumer (step S10).

### [3] Modification of the Embodiment

### [3. 1] First Modification

The above embodiment shows an example of the case where the POS register terminal 10 is used as a terminal from which the consumer pays the amount charged from the mail-order company. As the terminal from which the charge is paid, it is also possible to use a CD (Cash Dispenser) terminal, an ATM (Automatic Teller Machine) terminal, or a personal computer.

### [3.2]Second Modification

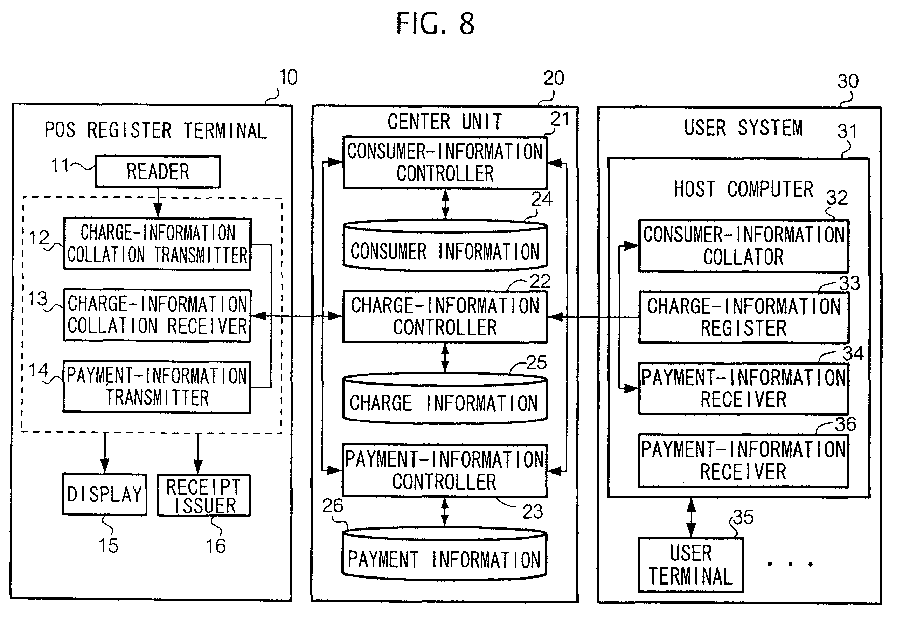

In the above embodiment, the payment-information controller 23 of the center unit 20 transmits the payment-information data received from the POS register terminal 10 to the host computer 31. However, the present invention is not limited to this embodiment. For example, as shown in Fig. 8, it is also possible to provide a payment information reader 36 (a payment data reader) in the host computer 31. This payment information reader 36 may extract the payment-information data from the payment-information database 26 and write the data into the host computer 31.

### [3.3]Third Modification

In the above embodiment, the reader 11 of the POS register terminal 10 reads the membership number data that has been stored in the barcode. However, the present invention is not limited to this embodiment. For example, it is also possible to arrange such that the membership number is recognized based on data that has been input by depressing an input key or the like provided in the POS register terminal 10.

Further, in the above embodiment, the membership number is stored in the magnetic stripe and the barcode of the payment card. However, the present invention is not limited to this embodiment. For example, it is also possible to store the membership number on an IC card, an IC tag, a floppy disk, a compact disk, or in the memory of a portable telephone or a PHS.

### [3.4]Fourth Embodiment

In the above embodiment, the consumer information database 24, the charge information database 25, and the payment-information database 26 are explained as the databases held by the center unit 20. However, the number and the structures of the database are not limited to the example explained above. It is also possible to use one or a plurality of databases so long as the data stored in each database can be used efficiently.

### [3.5]Fifth Embodiment

In the above embodiment, the user system 30 consists of the host computer 31 and the user terminals 35. However, the user system 30 may consist of a server terminal and the user terminals 35.

## Claims

1. A center unit that can be connected, via a communication line, to a terminal unit to which information representing a payment of a charge is input, the center unit comprising:
charge data storage that stores charge data representing a charge and a consumer;
payment data storage that stores payment data corresponding to the charge data;
a charge data controller that receives consumer data, representing the consumer, transmitted from the terminal unit, reads the charge data corresponding to the consumer data from the charge data storage, and transmits the charge data to the terminal unit; and
a payment data controller that receives payment-information data representing the payment of the charge corresponding to the charge data from the terminal unit, and registers payment data generated based on the payment-information data into the payment data storage.

2. The center unit according to claim 1, wherein
the payment data controller transmits the payment-information data to an external user-system managing unit.

3. A terminal unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from an external terminal unit, reads the charge data corresponding to the consumer data from the charge data storage, and transmits the charge data to the external terminal unit; and a payment data controller that receives payment-information data representing the payment of the charge corresponding to the charge data from the external terminal unit, and registers payment data generated based on the payment-information data into the payment data storage, wherein
the terminal unit comprises:
a consumer data transmitter that transmits consumer data to the center unit;
a charge data receiver that receives charge data corresponding to the consumer data, from the center unit;
a display that displays charge information including a charge, based on the charge data received by the charge data receiver; and
a payment-information data transmitter that pays the charge based on the received charge data, and transmits the payment-information data to the center unit.

4. A terminal unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from an external terminal unit, reads the charge data corresponding to the consumer data from the charge data storage, and transmits the charge data to the external terminal unit; and a payment data controller that receives payment-information data representing the payment of the charge corresponding to the charge data from the external terminal unit, and registers payment data generated based on the payment-information data into the payment data storage, wherein
the terminal unit comprises: a consumer data transmitter that transmits consumer data to the center unit; a charge data receiver that receives charge data corresponding to the consumer data, from the center unit; a display that displays charge information including a charge, based on the charge data received by the charge data receiver; a payment-information data transmitter that pays the charge based on the received charge data, and transmits the payment-information data to the center unit; and a reader that reads the consumer data.

5. A user-system managing unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from the terminal unit, reads the charge data corresponding to the consumer data from the charge data storage, and transmits the charge data to the terminal unit; and a payment data controller that receives payment-information data representing the payment of the charge corresponding to the charge data from the terminal unit, and registers payment data generated based on the payment-information data into the payment data storage, wherein
the user-system managing unit comprises:
a payment data reader that reads payment data from the payment data storage; and
a charge data registration updater that transmits the charge data to the center unit, in order to register or update the charge data stored in the charge data storage.

6. A user-system managing unit that can be connected, via a communication line, to a center unit comprising: charge data storage that stores charge data representing a charge and a consumer; payment data storage that stores payment data corresponding to the charge data; a charge data controller that receives consumer data, representing the consumer, transmitted from the terminal unit, reads the charge data corresponding to the consumer data from the charge data storage, and transmits the charge data to the terminal unit; and a payment data controller that receives payment-information data representing the payment of the charge corresponding to the charge data from the terminal unit, registers payment data generated based on the payment-information data into the payment data storage, and transmits the payment-information data to an external user-system managing unit, wherein
the external user-system managing unit comprises:
a payment-information data receiver that receives the transmitted payment-information data; and
a charge data registration updater that transmits the charge data to the center unit, in order to register or update the charge data stored in the charge data storage.

7. A method of controlling a center unit that can be connected, via a communication line, to a terminal unit to which information representing a payment of a charge is input, the center unit comprising: charge data storage that stores charge data representing a charge and a consumer; and payment data storage that stores payment data corresponding to the charge data, wherein
the method of controlling the center unit comprises:
a charge data controlling step that receives consumer data, representing the consumer, transmitted from the terminal unit, reads the charge data corresponding to the consumer data from the charge data storage, and transmits the charge data to the terminal unit; and
a payment data controlling step that receives payment-information data representing the payment of the charge corresponding to the charge data from the terminal unit, and registers payment data generated based on the payment-information data into the payment data storage.

8. The method of controlling a center unit according to claim 7, wherein
the payment data controlling step transmits the payment-information data to an external user-system managing unit.

9. A method of controlling a terminal unit that can be connected, via a communication line, to a center unit that executes a control method comprising: a charge data controlling step that receives consumer data representing a consumer transmitted from an external terminal unit, reads charge data corresponding to the consumer data from charge data storage, and transmits the charge data to the external terminal unit; and a payment data controlling step that receives payment-information data representing a payment of a charge corresponding to the charge data from the external terminal unit, and registers payment data generated based on the payment-information data into a payment data storage, wherein
the method of controlling the terminal unit comprises:
a consumer data transmitting step that transmits consumer data to the center unit;
a charge data receiving step that receives charge data corresponding to the consumer data, from the center unit;
a display step that displays charge information including a charge on a display, based on the charge data received at the charge data receiving step; and
a payment-information data transmitting step that pays the charge based on the received charge data, and transmits the payment-information data to the center unit.

10. A method of controlling a user-system managing unit that can be connected, via a communication line, to a center unit that executes a control method comprising: a charge data controlling step that receives consumer data representing a consumer transmitted from an external terminal unit, reads charge data corresponding to the consumer data from charge data storage, and transmits the charge data to the terminal unit; and a payment data controlling step that receives payment-information data representing a payment of a charge corresponding to the charge data from the terminal unit, and registers payment data generated based on the payment-information data into a payment data storage, wherein
the method of controlling the user-system managing unit comprises:
a payment data reading step that reads payment data from the payment data storage; and
a charge data registration updating step that transmits the charge data to the center unit, in order to register or update the charge data stored in the charge data storage.

11. A method of controlling a user-system managing unit that can be connected, via a communication line, to a center unit that executes a control method comprising: a charge data controlling step that receives consumer data representing a consumer transmitted from an external terminal unit, reads charge data corresponding to the consumer data from a charge data storage, and transmits the charge data to the terminal unit; and a payment data controlling step that receives payment-information data representing a payment of a charge corresponding to the charge data from the terminal unit, and registers payment data generated based on the payment-information data into a payment data storage, and transmits the payment-information data to an external user-system managing unit, wherein
the method of controlling the user-system managing unit comprises:
a payment-information data receiving step that receives the transmitted payment-information data; and
a charge data registration updating step that transmits the charge data to the center unit, in order to register or update the charge data stored in the charge data storage.

12. A medium recorded with a program of a center unit comprising: a charge data storage that stores charge data representing a charge and a consumer; and payment data storage that stores payment data corresponding to the charge data, wherein
the medium is recorded with a program of the center unit for
receiving consumer data representing the consumer transmitted from the terminal unit, reading the charge data corresponding to the consumer data from the charge data storage, and transmitting the charge data to the terminal unit, and further for
receiving payment-information data representing a payment of the charge corresponding to the charge data from the terminal unit, and registering payment data generated based on the payment-information data into the payment data storage.

13. The medium recorded with a program of a center unit according to claim 12, wherein
the medium is recorded with a program of the center unit for transmitting the payment-information data to an external user-system managing unit, in addition to the above program.

14. A medium recorded with a program of a terminal unit that can be connected, via a communication line, to a center unit that executes a program of receiving consumer data representing a consumer transmitted from an external terminal unit, reading charge data corresponding to the consumer data from a charge data storage, transmitting the charge data to the external terminal unit, receiving from the external terminal unit payment-information data representing a payment of a charge corresponding to the charge data, and registering payment data generated based on the payment-information data into a payment data storage, wherein
the medium is recorded with a program of the terminal unit for
transmitting consumer data to the center unit,
receiving charge data corresponding to the consumer data, from the center unit, and
displaying charge information including a charge on a display, based on the charge data received at the charge data receiving step, paying the charge based on the received charge data, and transmitting the payment-information data to the center unit.

15. A medium recorded with a program of a user-system managing unit that can be connected, via a communication line, to a center unit that executes a program of receiving consumer data representing a consumer transmitted from an external terminal unit, reading charge data corresponding to the consumer data from charge data storage, transmitting the charge data to the terminal unit, receiving payment-information data representing a payment of a charge corresponding to the charge data from the terminal unit, and registering payment data generated based on the payment-information data into a payment data storage, wherein
the medium is recorded with a program of the user-system managing unit for
reading payment data from the payment data storage, and
transmitting the charge data to the center unit, in order to register or update the charge data stored in the charge data storage.

16. A medium recorded with a program of a user-system managing unit that can be connected, via a communication line, to a center unit that executes a program of receiving consumer data representing a consumer transmitted from an external terminal unit, reading charge data corresponding to the consumer data from a charge data storage, transmitting the charge data to the terminal unit, receiving payment-information data representing a payment of a charge corresponding to the charge data from the terminal unit, registering payment data generated based on the payment-information data into a payment data-storage, 'and transmitting the payment-information data to an external user-system managing unit, wherein
the medium is recorded with a program of the user-system managing unit for
receiving the transmitted payment-information data, and
transmitting the charge data to the center unit, in order to register or update the charge data stored in the charge data storage.
